# EUROPÄISCHE PATENTSCHRIFT

(11) **EP 2 579 994 B1**
(45) Veröffentlichungstag und Bekanntmachung des Hinweises auf die Patenterteilung: **05.04.2017**
(21) Anmeldenummer: 11724613.2
(22) Anmeldetag: 06.06.2011
(51) Int. Cl.: B05D 1/30, B05D 3/04, B05D 7/02, B05C 11/06, B05D 7/00

(54) **VERFAHREN ZUR FLUTBESCHICHTUNG EINES POLYMEREN WERKSTOFFES**
METHOD FOR FLOOD COATING A POLYMERIC MATERIAL
PROCÉDÉ DESTINÉ AU REVÊTEMENT DE CANAL D'UNE MATIÈRE PREMIÈRE POLYMÈRE

(30) Priorität: 14.06.2010 EP 10165849
(43) Veröffentlichungstag der Anmeldung: 17.04.2013
(73) Patentinhaber: Saint-Gobain Glass France, 92400 Courbevoie (FR)
(72) Erfinder: SCHMIDT, Sebastian, 70176 Stuttgart (DE); TSCHURL, Thomas, 73084 Salach (DE); ZERR, Juri, 71364 Winnenden (DE)
(74) Vertreter: Gebauer, Dieter Edmund
(86) Internationale Anmeldenummer: PCT/EP2011/059311
(87) Internationale Veröffentlichungsnummer: WO 2011/157586

(56) Entgegenhaltungen:
- WO-A1-2008/134768

## Beschreibung

Die Erfindung betrifft ein Verfahren zur Flutbeschichtung eines polymeren Werkstoffes.

Beschichtung und Lackierung hat neben dem optischen Aussehen einen wesentlichen Einfluss auf die Oberflächenbeschaffenheit und Beständigkeit eines polymeren Werkstoffes. Dies betrifft sowohl den optischen Eindruck wie die Farbe oder Glanz des polymeren Werkstoffes, als auch seine chemische und mechanische Beständigkeit. Haftet die Lackierung nur schlecht auf dem zu beschichtenden Werkstück, so kann die Auftragung eines permanent haftenden Lackes in einem zweistufigen Prozess erfolgen. In einem ersten Schritt wird ein Primer aufgetragen, welcher eine chemische oder physikalische Bindung zwischen dem polymeren Werkstück und dem Decklack herstellt. Nach dem Auftragen und Aushärten des Primers kann die Funktionsschicht aufgetragen werden. Die Funktionsschicht und der Primer können neben farbgebenden Verbindungen und Pigmenten auch UV-Blocker, Konservierungsstoffe sowie Komponenten zur Erhöhung der Kratzfestigkeit, beispielsweise Nanopartikel enthalten. In vielen Fällen enthält der zuerst aufgetragene Primer UV-Blocker und Konservierungsstoffe. Auf dem Primer wird dann in einem zweiten Schritt der Hardcoat aufgetragen. Hardcoats enthalten in vielen Fällen hybride Polysiloxane, welche sowohl Si-O Gruppen als auch Si-R Gruppen mit organischen Resten -R enthalten. Diese Hardcoats weisen eine hohe Beständigkeit gegenüber mechanischer Belastung und aggressiven chemischen Substanzen oder Verbindungen auf. Dies schließt vor allem organische Lösemittel aber auch verdünnte Säuren und Basen mit ein.

Die Auftragung der Lackierung aus Primer und Topcoat kann über verschieden Verfahren erfolgen. Gebräuchliche Verfahren beinhalten Streichen und Rollen, Aufsprühen von Aerosolen, Pulverbeschichtung, Tauchlackierung und Flutbeschichtung von Lösungen, Emulsionen oder Suspensionen, sowie CVD (chemical vapor deposition) und PVD (physical vapor deposition) Verfahren aus der Gasphase. Die Verfahren unterscheiden sich dabei deutlich in ihrem apparativen Aufwand, den Kosten und insbesondere bei großen Stückzahlen ihrer Reproduzierbarkeit. Ein geläufiges Verfahren zur Lackierung von polymeren Werkstoffen in großen Stückzahlen ist die Flutbeschichtung. Dazu wird ein Bauteil von der Oberkante an mit einem flüssigen Lack beaufschlagt. Die resultierende Beschichtung kann mit einer oder mehreren fest montierten Flutdüsen oder Lackvorhang oder mit einem beweglichen Flutroboterarm erfolgen. Der ablaufende Lack benetzt dabei in Abhängigkeit von der Position des Flutroboterarms das gesamte Bauteil.

Ein Nachteil der Flutbeschichtung ist der physikalisch bedingte Schichtdickengradient von dem Punkt der Lackauftragung oder der oberen Anflutkante und der unteren Abtropfkante der überschüssigen Lackierung. Auf dem Weg über das zu beschichtende Bauteil verdunstet ein Teil des Lösemittels. Die Abnahme der Lösungsmittelkonzentration führt in vielen Fällen zu einer Viskositätszunahme des Lacks im Bereich der Abtropfkante. Die Zunahme der Viskosität verringert gleichzeitig die Abtropfgeschwindigkeit und bedingt gleichzeitig eine Zunahme der Schichtdicke im Bereich der Abtropfkante. Zudem können sich im Bereich der Abtropfkante vor- und teilpolymerisierte Lackanteile sammeln und anstauen. Im Anflutbereich wird die geforderte Schichtdicke häufig nicht erreicht, während sich an der Abtropfkante, bedingt durch das Nachfließen des Lackes, eine zu hohe Schichtdicke aufbauen kann. Eine zu geringe Schichtdicke kann den Verlust der Witterungsstabilität und damit eine schnelle Alterung des beschichteten Bauteils zur Folge haben. Im Gegensatz dazu bewirkt eine zu hohe Schichtdicke des Lackes häufig eine Spannungsrissbildung. Dieser Effekt verstärkt sich, wenn mehrere Lack- oder Funktionsschichten auf dem zu beschichtenden Werkstück aufgetragen werden.

Die DE 199 06 247 A1 offenbart ein Verfahren zur Herstellung einer zweischichtigen Decklackierung auf Kraftfahrzeugkarosserien. Eine transparente Decklackschicht aus einem Klarlacküberzugsmittel wird auf eine wasserbasierte Basislackschicht appliziert.

Die GB 1,097,461 A offenbart ein Verfahren zur Bedruckung und Färben von Kunststoffseiten oder -filmen. Die Farbe kann durch Aufpinseln, Sprühen oder Flutbeschichtung aufgetragen werden und anschließend gegebenenfalls durch Trocknung fixiert werden.

Die GB 1,201,292 A offenbart einen Acryllack für Holz, Glas, Plastik und Kunststoffkarosserieteile, welcher bei niedrigen Temperaturen gehärtet werden kann. Der Acryllack kann durch Sprühen, Tauchen, Pinseln oder Flutbeschichtung aufgetragen werden.

Die GB 2 123 841 A offenbart eine dünne, kratzfeste Polyurethanbeschichtung welche über Tauch- und Flutbeschichtungsverfahren auf dem Werkstoff aufgebracht werden kann. Mögliche Substrate sind unter anderem transparente Polycarbonate und thermoplastische Polyuerethanscheiben.

WO 2008/134768 A1 offenbart ein Verfahren zur Flutbeschichtung eines polymeren Werkstoffes. Die Beschichtung erfolgt dabei mit einem voreingestellten Beschichtungswinkel. Für eine Vergleichmäßigung der Schichtdicke des aufgebrachten Lacks werden zwei Lackschichten aufgebracht, wobei die Scheibe vor dem Aufbringen der zweiten Lackschicht um 180° gedreht wird.

Die Aufgabe der Erfindung liegt darin, ein Verfahren zur Flutbeschichtung eines polymeren Werkstoffes bereitzustellen, welches auf dem zu beschichtenden Bauteil eine gleichmäßige Schichtdicke der aufgetragenen Lackschichten ermöglicht. Insbesondere der Schichtdickengradient der Lackierung von der oberen Anflutkante zu der unteren Abtropfkante sollte so gering wie möglich ausfallen.

Die Aufgabe der vorliegenden Erfindung wird erfindungsgemäß durch ein Verfahren zur Flutbeschichtung eines polymeren Werkstoffes gemäß Anspruch 1 gelöst. Bevorzugte Ausführungen gehen aus den Unteransprüchen hervor.

Das erfindungsgemäße Verfahren zur Flutbeschichtung eines polymeren Werkstoffes umfasst einen ersten Schritt, wobei mindestens ein Bauteil mit einem Winkel von 25° bis 90° zum Boden in eine Halterung eingelegt wird. Das Bauteil wird anschließend von einer oberen Kante an mit einem Lack beschichtet, der 10 Gew. % bis 30 Gew. %, bevorzugt 15 Gew. % bis 20 Gew. %, 4-Methyl-2-pentanon und/oder Derivate enthält. Der Lack fließt von der oberen Kante über das Bauteil bis zur Abtropfkante. In Abhängigkeit von der Größe des zu beschichtenden Bauteils fließt der Lack aus einem Lackvorhang und/oder aus mehreren nebeneinander angeordneten Düsen auf das Bauteil. In einer weiteren Möglichkeit wird der Lack aus einem beweglichen Düsenarm auf das Bauteil aufgebracht.

Das schnell verdunstende Lösemittel 4-Methyl-2-pentanon begünstigt maßgeblich die Filmbildung, indem es die Fließdynamik der Beschichtung vorzeitig zum Erliegen bringt und somit einem Filmschrumpf im Bereich der oberen Kante durch zu langes Nachfließen des Lackes, sowie einem erhöhtem Lackaufbau an der unteren Kante durch Nachschieben des Lackes entgegenwirkt. Auf diese Weise wird eine homogenere Schichtdicke in Y-Richtung entlang der Bauteiloberfläche erzielt. Versuche haben eine Zunahme der Schichtdicke im Bereich der oberen Kante (bis etwa 30 % der Länge des Bauteils von der oberen Kante) um 2-10 % und eine Abnahme der Schichtdicke im Bereich der unteren Kante (bis etwa 30 % der Länge des Bauteils von der unteren Kante) von 2-10 % ergeben.

In einer Ausgestaltung des erfindungsgemäßen Verfahrens zur Flutbeschichtung eines polymeren Werkstoffs wird gleichzeitig und/oder während der Lack auf das Bauteil fließt, der Lack unterhalb der oberen Kante des Bauteils mit einem Luftstrom beaufschlagt. Der Ausdruck "unterhalb der obere Kante" schließt im Sinne der Erfindung bis zu 30 % der an die Kante des Bauteils angrenzenden Oberfläche mit ein. Die Beaufschlagung mit dem Luftstrom von zumindest Teilbereichen innerhalb des Bereiches unterhalb der oberen Kante erhöht die Verdunstung der im Lack befindlichen Lösemittel und erhöht die Viskosität des Lackes. Die erhöhte Viskosität verlangsamt das Abfließen des Lackes im Bereich unterhalb der oberen Kante und gleicht die Schichtdicke des Lackes unterhalb der oberen Kante an die Schichtdicke des Lackes an der unteren Abtropfkante an.

In einer weiteren Ausgestaltung des erfindungsgemäßen Verfahrens zur Flutbeschichtung eines polymeren Werkstoffes wird in einem ersten Schritt mindestens ein Bauteil mit einem Winkel von 25° bis 90° zum Boden in eine Halterung eingelegt. Anschließend wird das Bauteil an einer oberen Kante auf eine Temperatur von 25 °C bis 100 °C erwärmt und währenddessen und/oder anschließend von der oberen Kante an mit dem Lack beschichtet. Der Ausdruck "oberen Kante" bezieht sich wie oben beschrieben auf 30 % der an die Kante angrenzenden Oberfläche des Bauteils. Die Erwärmung der oberen Kante kann mit einem heißen Luftstrom oder -gebläse erfolgen. Eine alternative Möglichkeit ist die Erwärmung mit Hilfe von Strahlungswärme, beispielsweise mit einem Infrarotstrahler. Die Erwärmung des Bauteils unterhalb der oberen Kante erhöht, wie bei der Beaufschlagung mit einem Luftstrom, die Verdunstung der im Lack befindlichen Lösemittel und erhöht die Viskosität des Lackes. Die erhöhte Viskosität verlangsamt das Abfließen des Lackes im Bereich unterhalb der oberen Kante und gleicht die Schichtdicke des Lackes unterhalb der oberen Kante (Anflutkante) an die Schichtdicke des Lackes an der unteren Abtropfkante an.

Die beiden beschriebenen Ausgestaltungen des erfindungsgemäßen Verfahrens können auch in einem automatisierten Prozess wiederholt werden. Die Wiederholung der Lackauftragung sowie die Beaufschlagung mit einem Luftstrom oder die Erwärmung des Bauteils ermöglichen die Abscheidung von mehreren gleichen und/oder verschiedenen Lackschichten. Die Wiederholung kann sowohl an derselben Vorrichtung als auch an durch ein Laufband miteinander verbundenen verschiedenen erfindungsgemäßen Vorrichtungen erfolgen.

Das Bauteil wird bevorzugt mit einem Winkel von 35° bis 70°, besonders bevorzugt 40° bis 60°, zum Boden in die Halterung eingelegt. Die Halterung enthält bevorzugt Metalle und/oder Legierungen, besonders bevorzugt Eisen, Aluminium, Chrom, Vanadium, Nickel, Molybdän, Mangan oder Polymere wie Polyethylen, Polypropylen, Polystyrol, Polyurethane, Polycarbonate, Polymethylmetacrylate, Polyacrylate, Polyester, Polyamide und/oder Gemische oder Copolymere davon.

Der Luftstrom weist bevorzugt eine Geschwindigkeit von 1 m/s bis 5 m/s, bevorzugt 2 m/s bis 4 m/s, auf.

Der Luftstrom weist bevorzugt eine Temperatur von 30 °C bis 150 °C, bevorzugt von 40 °C bis 80 °C, auf.

Gezeigt, aber nicht Teil der Erfindung ist eine Vorrichtung zur Flutbeschichtung eines polymeren Werkstoffes. Die Vorrichtung umfasst mindestens ein mit einem Winkel von 25° bis 90° zum Boden in eine Halterung eingelegtes Bauteil. Das Bauteil enthält mindestens einen polymeren Werkstoff, daneben kann das Bauteil auch ein Metall und/oder Glas enthalten. Der polymere Werkstoff enthält bevorzugt Polyethylen, Polypropylen, Polystyrol, Polyurethane, Polycarbonate, Polymethylmetacrylate, Polyacrylate, Polyester, Polyamide, Polyethylenterephthalat und/oder Gemische oder Copolymere davon, besonders bevorzugt Polycarbonat und Polycarbonatblends wie Polycarbonat/Polyethylenterephthalat; Polycarbonat/Acrylnitril-Butadien-Styrol; Polycarbonat/Polybutylenterephthalat. Das Bauteil weist bevorzugt eine Oberfläche von mehr als 250 cm², besonders bevorzugt von mehr als 500 cm², auf. Über dem Bauteil ist eine Düse, bevorzugt ein beweglicher Roboterarm, zum Aufbringen von Lack auf dem Bauteil angeordnet. Die Düse oder der bewegliche Roboterarm ermöglichen das Ausbringen des Lackes an der vom Boden aus oberen Kante und 30 % der an die Kante angrenzenden Oberfläche des Bauteils. Eine Luftdüse und/oder Wärmequelle ist auf die Oberkante des Bauteils ausgerichtet. In Abhängigkeit von der Größe und Breite des Bauteils können auch mehrere Luftdüsen und/oder Wärmequellen nebeneinander angeordnet sein.

Die Halterung ist bevorzugt auf einem Laufband, Bodenförderer oder Hängeförderer angebracht. Das Laufband befindet sich bevorzugt innerhalb einer Lackierstrasse und ermöglicht so die Flutbeschichtung von großen Mengen des Bauteils und mehreren Lackierschritten.

Die Luftdüse oder Luftlanze ist bevorzugt in einem Abstand von 100 mm bis 1000 mm, bevorzugt 150 mm bis 400 mm, von dem Bauteil im zeitweilig stationären (geparkten) Zustand angeordnet.

Es sind bevorzugt 1 bis 10 Luftdüsen, besonders bevorzugt 2 bis 5 Luftdüsen, vor dem Bauteil angeordnet.

Der Lack enthält bevorzugt einen Decklack (Topcoat) und/oder Primer, besonders bevorzugt im Decklack organisch modifizierte Silikonharze und/oder Polyacrylate im Primer.

Der Lack enthält bevorzugt Lösemittel, bevorzugt Wasser, Alkohole, Phenole und/oder Ketone, besonders bevorzugt 4-Methyl-2-pentanon, Ethanol, Methanol, 2-Propanol, n-Butanol, 1-Methoxy-2-propanol, 4-Hydroxy-4-methyl-2-pentanon, und/oder Gemische oder Derivate davon.

Der Primer enthält Lösemittel, bevorzugt 1-Methoxy-2-propanol, 4-Hydroxy-4-methyl-2-pentanon, und/oder Gemische oder Derivate davon. Der Decklack enthält Lösemittel, bevorzugt Wasser, besonders bevorzugt Methanol, 2-Propanol, n-Butanol, und/oder Gemische oder Derivate davon.

Gezeigt, aber nicht Teil der Erfindung ist des Weiteren die Verwendung der Vorrichtung zur Flutbeschichtung von polymeren Werkstoffen, bevorzugt zur Flutbeschichtung von Kunststoffteilen, in Fahrzeugen, besonders bevorzugt zur Flutbeschichtung von Fahrzeugdächern und/oder Automobilverscheibungen aus Kunststoff.

Im Folgenden wird die Erfindung anhand einer Zeichnung näher erläutert. Die Zeichnung ist eine rein schematische Darstellung und nicht maßstabsgetreu. Die Zeichnung schränkt die Erfindung in keiner Weise ein.
Es zeigen:
Figur 1 eine schematische Ansicht einer Vorrichtung zur Flutbeschichtung eines polymeren Werkstoffs,
Figur 2 eine schematische Ansicht einer weiteren Vorrichtung zur Flutbeschichtung eines polymeren Werkstoffs,
Figur 3 einen Querschnitt eines flutbeschichteten Bauteils nach dem Stand der Technik und
Figur 4 einen Querschnitt eines flutbeschichteten Bauteils gemäß dem erfinderischen Verfahren.

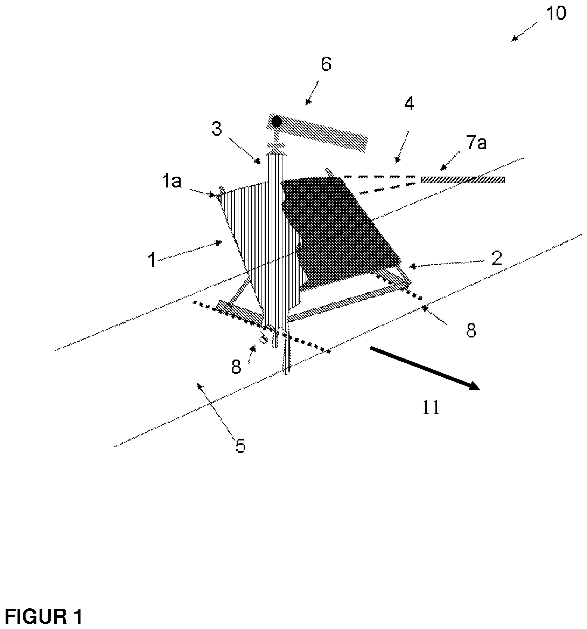

Figur 1 zeigt eine schematische Ansicht einer Vorrichtung (10) zur Flutbeschichtung eines polymeren Werkstoffs. Das zu beschichtende Bauteil (1) befindet sich in einer Halterung (2) und wird von einem beweglichen Düsenarm (6) von der oberen Kante (1a) des Bauteils (1) mit Lack (3) beschichtet. Im Bereich innerhalb der oberen Kante (1a) des Bauteils (1), d.h. 30 % der an die Kante angrenzenden Oberfläche, wird der Lack (3) mit einem Luftstrom (4) aus einer Luftdüse (7a) beaufschlagt. Die Halterung (2) befindet sich bevorzugt auf Bodenförderern (8). Die Bodenförderer (8) auf dem Boden (5) ermöglichen die Verwendung der Vorrichtung (10) in Laufrichtung (11) in Lackierstraßen und Fließbändern.

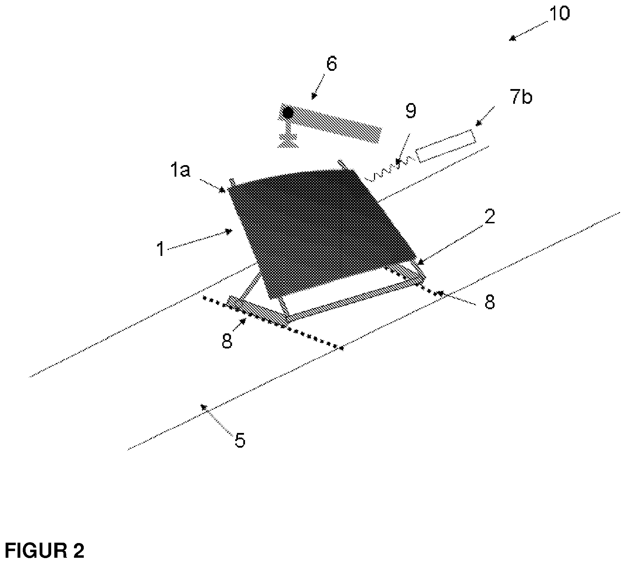

Figur 2 zeigt eine schematische Ansicht einer weiteren Vorrichtung (10) zur Flutbeschichtung eines polymeren Werkstoffs. Der grundsätzliche Aufbau entspricht dem in Figur 1 beschriebenen Aufbau der Vorrichtung. Im Bereich der oberen Kante wird das Bauteil jedoch vor oder während des nicht gezeigten Lackauftrags (3) von einer Wärmequelle (7b) erwärmt. Das Lösungsmittel im Lack (3) verdunstet schneller im erwärmten Bereich und erzeugt so eine höhere Viskosität und Schichtdicke (a) an der oberen Kante (1a). Die Laufbänder (8) auf dem Boden (5) ermöglichen wie auch in Figur 1 die Verwendung der Vorrichtung (10) in Lackierstraßen und Fließbändern.

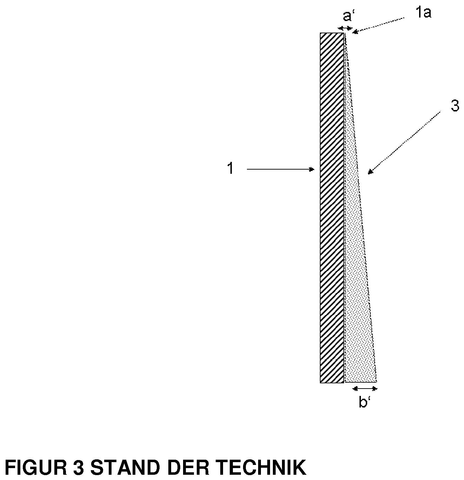

Figur 3 zeigt einen Querschnitt eines flutbeschichteten Bauteils nach dem Stand der Technik. Das Bauteil (1) wurde von der oberen Kante (a') bis zur Abtropfkante (b') flutbeschichtet. Im Lack (3) verdunstet beim Fließen über das Bauteil (1) ein Teil des Lösungsmittels. Dieser Effekt ist umso größer, je länger das Bauteil (1) und je höher die Außentemperatur ist. Die Abnahme des Lösungsmittels im Lack (3) bewirkt eine Zunahme der Viskosität des Lackes (3) und damit eine nachteilige Zunahme der Lackschichtdicke im Bereich der Abtropfkante (b').

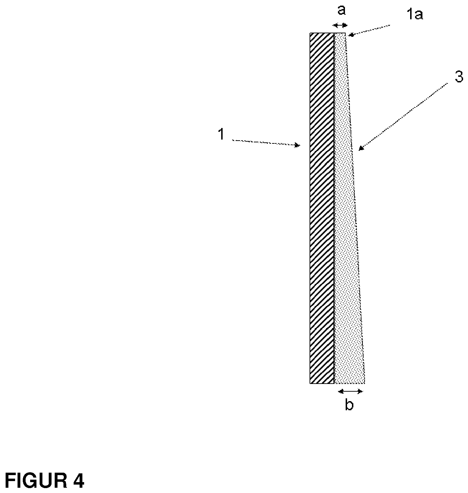

Figur 4 zeigt einen Querschnitt eines flutbeschichteten Bauteils gemäß dem erfinderischen Verfahren. Das Bauteil (1) wurde von der oberen Kante (a) bis zur Abtropfkante (b) flutbeschichtet und der Lack (3) währenddessen unterhalb der oberen Kante (1a) des Bauteils (1) mit einem Luftstrom (4) beaufschlagt. Im Lack (3) verdunstet ein Teil des Lösungsmittels beim Fließen über das Bauteil (1), dieser ist wie in Figur 1 beschrieben umso größer, je länger das Bauteil und je höher die Außentemperatur ist. Die Beaufschlagung mit einem Luftstrom (4) erhöht jedoch die Verdunstung des Lösungsmittels des Lackes (3) an der oberen Kante (a). Die daraus resultierende höhere Viskosität erhöht die Schichtdicke des Lackes (3) an der oberen Kante (a) und sorgt für einen geringeren Unterschied zur Schichtdicke des Lackes (3) an der Abtropfkante (b). Im Vergleich zur Flutbeschichtung mit einem Bauteil gemäß Figur 3 nimmt die mittlere Schichtdicke der oberen Kante (1 a) bei einer erfindungsgemäßen Vorrichtung und Verfahren um 3 % bis 5 % zu.

### Bezugszeichenliste:

- (1): Bauteil
- (1a): obere Kante des Bauteils
- (2): Halterung
- (3): Lack
- (4): Luftstrom
- (5): Boden
- (6): Düse/Sprüharm
- (7a): Luftdüse
- (7b): Wärmequelle
- (8): Laufband/Bodenförderer
- (9): Wärmestrahlung
- (10): erfindungsgemäße Vorrichtung
- (11): Laufrichtung
- (a, a'): obere Kante/Anflutkante und
- (b, b'): Abtropfkante

## Patentansprüche

1. Verfahren zur Flutbeschichtung eines polymeren Werkstoffes, wobei
a. mindestens ein Bauteil (1) in einem Winkel von 25° bis 90° zum Boden (5) in eine Halterung (2) eingelegt wird und
b. das Bauteil (1) von der oberen Kante (1 a) mit einem Lack (3), enthaltend 10 Gew. % bis 30 Gew. %. 4-Methyl-2-pentanon und/oder Derivate davon, beschichtet wird, wobei in Schritt (b) bis zu 30 % der an die obere Kante (1a) angrenzende Oberfläche des Bauteils (1) mit einem Luftstrom (4) beaufschlagt wird und/oder vor und/oder während Schritt (b) bis zu 30 % der an die obere Kante (1 a) angrenzenden Oberfläche des Bauteils (1) auf eine Temperatur von 25 °C bis 100 °C gehalten wird.

2. Verfahren nach Anspruch 1, wobei der Schritt b nach 30 s bis 120 s mindestens einmal wiederholt wird.

3. Verfahren nach einem der Ansprüche 1 bis 2, wobei das Bauteil (1) mit einem Winkel von 35° bis 70°, bevorzugt 40° bis 60°, zum Boden in die Halterung (2) eingelegt wird.

4. Verfahren nach einem der Ansprüche 1 bis 3, wobei der Luftstrom (4) eine Geschwindigkeit von 1 m/s bis 5 m/s, bevorzugt 2 m/s bis 4 m/s aufweist.

5. Verfahren nach einem der Ansprüche 1 bis 4, wobei der Luftstrom (4) eine Temperatur von 30 °C bis 150 °C, bevorzugt von 40°C bis 80 °C, aufweist.

6. Verfahren nach einem der Ansprüche 1 bis 5, wobei der Lack (3) Decklacke und/oder Primer enthält.

7. Verfahren nach Anspruch 6, wobei der Decklack und/oder die Primer organisch modifizierte Silikonharze und/oder Polyacrylate enthalten.

8. Verfahren nach einem der Ansprüche 1 bis 7, wobei der Lack (3) Lösemittel, bevorzugt Wasser, Alkohol, Phenole und/oder Ketone, besonders bevorzugt 4-Methyl-2-pentanon, Ethanol, Methanol, 2-Propanol, n-Butanol, 1-Methoxy-2-Propanol, 4-Hydroxy-4-methyl-2-pentanon, und/oder Gemische oder Derivate davon enthält.

## Claims

1. Method for flow coating a polymeric material, wherein
a. at least one component (1) is inserted at an angle of 25° to 90° relative to the floor (5) into a holder (2), and
b. the component (1) is coated from the upper edge (1 a) with a varnish (3), containing 10 wt.-% to 30 wt.-% of 4-methyl-2-pentanone and/or derivatives thereof,
wherein in step (b) up to 30 % of the surface of the component (1) adjacent the upper edge (1 a) is impinged on by a stream of air (4), and/or before and/or during step (b) up to 30 % of the surface of the component (1) adjacent the upper edge (1 a) is maintained at a temperature of 25 °C to 100 °C.

2. Method according to claim 1, wherein the step b is repeated at least once after 30 s to 120 s.

3. Method according to one of claims 1 through 2, wherein the component (1) is inserted at an angle of 35° to 70°, preferably 40° to 60° relative to the floor into the holder (2).

4. Method according to one of claims 1 through 3, wherein the stream of air (4) has a speed of 1 m/s to 5 m/s, preferably 2 m/s to 4 m/s.

5. Method according to one of claims 1 through 4, wherein the stream of air (4) has a temperature of 30 °C to 150 °C, preferably of 40°C to 80 °C.

6. Method according to one of claims 1 through 5, wherein the varnish (3) contains topcoats and/or primers.

7. Method according to claim 6, wherein the topcoat and/or the primers contain organically modified silicone resins and/or polyacrylates.

8. Method according to one of claims 1 through 7, wherein the varnish (3) contains solvents, preferably water, alcohol, phenols, and/or ketones, particularly preferably 4-methyl-2-pentanone, ethanol, methanol, 2-propanol, n-butanol, 1-methoxy-2-propanol, 4-hydroxy-4-methyl-2-pentanone, and/or mixtures or derivatives thereof.

## Revendications

1. Procédé de revêtement coulé d'un matériau polymère, où
a. au moins un composant (1) est inséré dans un support (2) à un angle de 25° à 90° par rapport au fond (5) et
b. le composant (1) est recouvert à partir du bord supérieur (1a) avec un vernis (3), contenant de 10% à 30% en poids de 4-méthyl-2-pentanone et/ou des dérivés de celui-ci,
où à l'étape (b) un flux d'air (4) est appliqué sur jusqu'à 30% de la surface du composant (1) adjacente au bord supérieur (1a) et/ou avant et/ou pendant l'étape (b) jusqu'à 30 % de la surface du composant (1) adjacente au bord supérieur (1a) est maintenue à une température de 25° C à 100° C.

2. Procédé selon la revendication 1, où l'étape b est répétée au moins une fois après 30 à 120 secondes.

3. Procédé selon l'une des revendications 1 ou 2, où le composant (1) est inséré dans le support (2) à un angle de 35° à 70°, de préférence 40° à 60 °, par rapport au fond.

4. Procédé selon l'une des revendications 1 à 3, où le flux d'air (4) présente une vitesse de 1 m/s à 5 m/s, de préférence de 2 m/s à 4 m/s.

5. Procédé selon l'une des revendications 1 à 4, où le flux d'air (4) présente une température de 30° C à 150° C, de préférence de 40° C à 80° C.

6. Procédé selon une des revendications 1 à 5, où le vernis (3) contient des vernis de finition et/ou d'apprêt.

7. Procédé selon la revendication 6, où le vernis de finition et/ou d'apprêt contient des résines de silicone organiquement modifiées et/ou des polyacrylates.

8. Procédé selon l'une des revendications 1 à 7, où le vernis (3) contient des solvants, de préférence de l'eau, de l'alcool, des phénols et/ou des cétones, de manière particulièrement préférée du 4-méthyl-2-pentanone, de l'éthanol, du méthanol, 2-propanol, n-butanol, 1-méthoxy-2-propanol, 4-Hydroxy-4-methyl-2-pentanone, et/ou des mélanges ou des dérivés de ceux-ci.
